(19) Europäisches Patentamt
European Patent Office
Office européen des brevets

(11) **EP 1 692 800 B1**

(12) **EUROPEAN PATENT SPECIFICATION**

(45) Date of publication and mention
of the grant of the patent:
**30.06.2010 Bulletin 2010/26**

(51) Int Cl.:
*G06F 7/72* (2006.01)     *H04K 1/00* (2006.01)
*H04L 9/00* (2006.01)

(21) Application number: **04806656.7**

(22) Date of filing: **16.11.2004**

(86) International application number:
**PCT/IL2004/001053**

(87) International publication number:
**WO 2005/048008 (26.05.2005 Gazette 2005/21)**

(54) **ENHANCED NATURAL MONTGOMERY EXPONENT MASKING**

VERBESSERTE NATÜRLICHE MONTGOMERY-EXPONENTENMASKIERUNG

MASQUAGE NATUREL D'EXPOSANT AMÉLIORÉ EFFECTUÉ AVEC L'ARITHMÉTIQUE DE MONTGOMERY

(84) Designated Contracting States:
**AT BE BG CH CY CZ DE DK EE ES FI FR GB GR HU IE IS IT LI LU MC NL PL PT RO SE SI SK TR**

(30) Priority: **16.11.2003 US 523773 P**

(43) Date of publication of application:
**23.08.2006 Bulletin 2006/34**

(73) Proprietor: **SanDisk IL Ltd**
**Omer 84965 (IL)**

(72) Inventors:
• **GRESSEL, Carmi**
**85530 Kvutzat Urim (IL)**
• **DOLGUNOV, Boris**
**69481 Tel Aviv (IL)**
• **DEROUET, Odile**
**F-50600 Saint Hilaire du Harcouet (FR)**

(74) Representative: **Cross, Rupert Edward Blount**
**Boult Wade Tennant**
**Verulam Gardens**
**70 Gray's Inn Road**
**London WC1X 8BT (GB)**

(56) References cited:
US-A- 5 003 596       US-A- 5 745 398
US-A- 6 085 210       US-A1- 2004 064 274
US-A1- 2005 084 099   US-B1- 6 185 596
US-B1- 6 748 410      US-B1- 6 795 553
US-B1- 6 882 727

• BORST J ET AL: "Cryptography on smart cards" COMPUTER NETWORKS, ELSEVIER SCIENCE PUBLISHERS B.V., AMSTERDAM, NL, vol. 36, no. 4, 16 July 2001 (2001-07-16), pages 423-435, XP004304907 ISSN: 1389-1286
• MESSERGES T S ET AL: "Power analysis attacks of modular exponentiation in smartcards" CRYPTOGRAPHIC HARDWARE AND EMBEDDED SYSTEMS. INTERNATIONALWORKSHOP, XX, XX, 1 August 1999 (1999-08-01), pages 144-157, XP000952221
• KALISKI B.S.: 'The Montgomery Inverse and Its Applications.' IEEE. vol. 44, no. 8, 1995, pages 1064 - 1065, XP000525965
• MENEZES A.J. ET AL: 'Handbook of Applied Cryptography, chapter 14', 1996, CRC PRESS. pages 591 - 634, XP008055020

**Description**

Field of the Invention

The present invention relates to the field of cryptography, and, in particular, to cryptographic algorithms and devices intended to be secure against physical attack, such as smart cards utilizing public key cryptosystems.

Background of the Invention

Cryptographic masking methods are described in the reference Cryptography, Theory and Practice, by Douglas Stinson, CRC Press, 1995 (herein denoted as "Stinson"). A discussion of non-invasive attack techniques and the masking of confidential moduli appears in U.S. Patent 5,991,415 to Shamir (herein denoted as "Shamir"). Masking methods are also disclosed in U.S. Patent 6,298,442 to Kocher et al. (herein denoted as "Kocher"), and in PCT publication W003014916 of Joye et al. (herein denoted as "Joye").

Montgomery arithmetic was first described in, "Modular Multiplication Without Trial Division", by Peter Montgomery, Mathematics of Computation, 44 (1985). A Montgomery arithmetic method and apparatus is disclosed in U.S. Patent 6,185,596 (herein denoted as '596).

An overview of cryptographic primitives commonly implemented on smart cards is presented in "Cryptography on smart cards", by Borst, et al. (Computer Networks, vol. 36 no. 4, July 16 2001, pages 423 - 435, Elsevier Science Publishers BV, Amsterdam, NL). This paper highlights cryptographic attacks to which smart cards may be vulnerable, such as timing and power analysis attacks to discover secret exponents.

Three types of power analysis attack against smartcards are presented and discussed in "Power Analysis Attacks of Modular Exponentiation in Smartcards", by Messerges, et al. (Cryptographic Hardware and Embedded Systems, International Workshop, August 1 1999, pages 144 - 157). Experiments conducted by the authors confirm that secret exponents can be extracted from a smartcard non-invasively using various techniques and equipment described in this paper.

Summary of the Invention

Many public key cryptosystems make use of modulo exponentiation, and a common operation within such cryptosystems is to raise a message to the power of a number. For example, encryption may involve raising a plaintext message to a public exponent, and decryption may involve raising a ciphertext message to a private (secret) exponent..The term "message" herein denotes any input to a cryptographic algorithm for purposes including, but not limited to: encryption; decryption; digital signature; validation; and authentication. The terms "private" and "secret" herein denote information related to the private key of a public key cryptosystem.

A well-known method of performing exponentiation involves repeated squaring with selective multiplication corresponding to the "one" bits of the exponent. A device which performs exponentiation utilizing this method or similar methods may be insecure, because the device can be externally-monitored (non-invasively) during the exponentiation process to read a secret exponent by various physical means, such as power-consumption monitoring. Choosing the message to be a particular value (a "chosen message attack") can, for example, force the device to consume detectable differences in power when performing the multiplication operation during exponentiation, and these detectable differences can reveal the locations of the "one" bits of the secret exponent. There are many well known techniques or power analysis that allow a secret key to be extracted from a cryptography device. Thus, susceptibility of the device to a chosen message attack based on power analysis is a security hazard. In addition to power analysis, there are other non-invasive schemes to attack devices which are intended to be secure, including detection of radiation emitted from the device. These schemes can rely on any externally-detectable and measurable physical phenomena that reveal information from which secret key values can be deduced.

Various techniques have been used to disguise or obscure the internal operation of such devices. A well-known technique is to perform dummy operations which cause similar physical effects (such as in power consumption or the emission of radiation), but whose results are simply discarded and do not affect the output. By analyzing the chosen message attack, however, it is computationally possible to identify the inserted dummy operations and thereby determine secret key information in spite of the use of dummy operations.

In order to thwart the chosen message attack strategy, it is considered best if the device not perform critical computations directly on the message itself, but rather on an intermediate value derived from the message, preferably via a masking function of the message which also takes a random input. Of course, this requires that the effects of this masking function be removable from the result.

The above-referenced ElGamal system may be employed as follows:

Given: a, a secret key known only to the recipient of an encrypted message; x, a message to be encrypted and transmitted by a sending member of the system; and publicly-known elements: p, a modulus; $\alpha$ the exponential base; and the recipient's public key $\beta = \alpha^a \mod p$.

The sender confidentially prepares and transmits $y_1$ and $y_2$ where:

$y_1 = \alpha^k \mod p$: where k is a random masking exponent, generated by the sender,
$y_2 = x\beta^k \mod p = x\alpha^{ak}$, the message x multiplied by the recipient's public key.

Later, using the transmitted message, $y_1$ and $y_2$, the recipient executes the following:

$M_1 = y_1^a = \alpha^{ak} \mod p$: raises $y_1$ to the a-th (recipient's secret) power,
$M_2 = N_1^{-1} \mod p = (\alpha^{ak})^{-1} \mod p = (\alpha^{ak})^{p-2} \mod p$; recipient inverts $M_1$,
$M_3 = y_2 M_2 = x (\alpha^{ak})(\alpha^{ak})^{-1} \mod p = x$. the retrieved masked message.

Note that the recipient does not learn the secret random mask. The resources expended by both the recipient and the sender consist of two exponentiations, which in both cases are typically lengthy operations.

Powers of multiplicative inverses are also multiplicative inverses. For example:

$5*9 \mod 11 \equiv° 1$: thugs. 5 and 9 are multiplicative inverses modulo 11.
$(5^7 \mod 11) \equiv 3$; and $((5^{-1})^7 \mod 11) \equiv (9^7 \mod 11) \equiv 4$.
$(3*4) \mod 11 \equiv 1$; thus. 3 and 4 are also multiplicative inverses, modulo 11.

Certain techniques commonly used to improve the efficiency of computation may also serve to mitigate the security hazard by effectively performing the computations on a function of the message, rather than on the message itself. In particular, it is well-known in the art that the use of Montgomery arithmetic can improve the speed of multiplication by eliminating the need for the division operation after multiplication to obtain the modulo remainder. For responsible security, it is desirable to utilize a further masking technique, based on Montgomery arithmetic, applied to the message itself and whose sole purpose is to foil chosen-message attacks.

Masking techniques may include the method of Shamir, which converts prime moduli to composite module, thereby changing the size of the machine operands, and the secret exponent. Shamir's method, however, assumes that a user has knowledge of the prime factors of the encryption modulus, which may not be the case. Furthermore, changing the size of operands grossly affects performance in most hardware devices. Some other methods of protection against attack may not be effective. For example, Joye demonstrates the ineffectiveness of using congruent exponents as suggested in Kocher.

A preferred embodiment of the present invention seeks to provide a method and apparatus for enhancing the natural masking of Montgomery representations, by further masking messages in a manner that allows the exponentiated messages to be easily recovered without having to perform inversion operations, and without having to know the prime factors of the encryption modulus.

A preferred embodiment of the present invention provides a novel method and apparatus for randomly masking input messages to a secure device in order to foil chosen-message attacks intended to reveal secret key information, such as a secret exponent. An object of a preferred embodiment of the present invention is to provide this masking without reducing performance and utilizing minimum resources, in particular, without having to generate modulo multiplicative inverses. A preferred embodiment of the present invention makes novel use of the natural properties of Montgomery arithmetic to maintain masked retrievals without the need for explicitly generating multiplicative inverse. In particular, there is a natural Montgomery inverse, $2^{-n}$, where n is the number of bits in the modulus, from which it is possible in accordance with a preferred embodiment of the present invention, to construct a novel mask.

Use of the method or apparatus of a preferred embodiment of the present invention does not rule out the use of other protective methods or apparatus useful for protecting against attacks, and typically serves to enhance such methods.

A preferred embodiment of the present invention is particularly advantageous for masking Diffie-Hellman key exchange exponentiations. DSS multiplicative inverses of random numbers, and RSA-type decryptions with users' secret keys over composite moduli.

Therefore, according to a preferred embodiment of the present invention there is provided a method for masking a ciphertext message input to a device operative to raise the message to a secret exponent d modulo a binary modulus N, the binary modulus N having n bits, the method including using the natural Montgomery inverse $2^{-n}$ to construct a mask. In addition, according to a preferred embodiment of the present invention there is also provided apparatus for masking a ciphertext message input to a device operative to raise the ciphertext message to an exponent d modulo a binary modulus N, the binary modulus N having n bits, the apparatus including a mask generator operative to construct a mask from the natural Montgomery inverse $2^{-n}$.

Moreover, according to a preferred embodiment of the present invention there is provided a method for masking a ciphertext message input to a device operative to raise the message to a secret exponent d modulo a binary modulus N, the binary modulus N having n bits, the method including: (a) generating a random integer x; (b) computing a mask equal to the number $2^{nx}$ mod N; (c) computing a message retriever equal to the number $2^{-nxd}$ mod N; (d) multiplying the ciphertext message by the mask to form a product: (e) raising the product to the secret exponent d modulo the binary modulus N to form a masked exponentiated message; and (f) multiplying the masked exponentiated message by the message retriever to form a retrieved plaintext message.

Furthermore, according to a preferred embodiment of the present invention there is also provided apparatus for masking a ciphertext message input to a device operative to raise the ciphertext message to an exponent d modulo a binary modulus N. the binary modulus N having n bits, the apparatus including: (a) a modulo processor operative to compute the product of two numbers modulo the binary modulus N and to raise a number to the power d modulo the binary modulus N; (b) a random integer generator for generating a random integer x: (c) a mask generator operative to compute a mask equal to the number $2^{nx}$ mod N. and to feed the mask to the modulo processor such that the modulo processor computes the product of the ciphertext message and the mask modulo the binary modulus N, and raises the product to the power of the exponent d modulo the binary modulus N to compute a masked message; and (d) a message retriever generator operative to compute a message retriever equal to the number $2^{-nxd}$ mod N and to feed the message retriever to the modulo processor, such that the modulo processor computes the product of the masked message and the message retriever to compute a plaintext message.

Brief Description of the Drawings

The invention is herein described, by way of example only, with reference to the accompanying drawings, wherein:

Figure 1 is a simplified block diagram of a prior-art Montgomery modulo arithmetic processor.
Figure 2 is a flowchart showing the sequence of preparing a Montgomery mask and message retriever according to a preferred embodiment of the present invention.
Figure 3 is a flowchart showing the sequence of using the Montgomery mask of Fig. 2 on an input message, according to a preferred embodiment of the present invention.
Figure 4 is a flowchart showing a preferred implementation of the method of Fig. 3, including using a Montgomery mask on an input message, using Montgomery functions operable on a Montgomery modulo multiplication apparatus as shown in Figure 1 or in Figure 5- according to a preferred embodiment of the present invention.
Figure 5 is a simplified block diagram of apparatus for masking and retrieving messages according to a preferred embodiment of the present invention.

Description of the Preferred Embodiments

The security challenge is to generate chosen-message exponentiations $M_i^d$ mod N, where each $M_i$ is a message, d is a secret exponent and N is an n-bit Modulus, without wholly or partly divulging (leaking) d or N through radiation, measured temporal current consumption, or other non-invasive physical means. It is understood that numbers are represented in binary fashion.

The device contains both N and d. Typically, the attacker has knowledge of N, and wishes to learn the sequence of ones and zeroes of the secret d. In chosen-message attacks, the attacker typically tries one or many $M_i$'s, to establish a detectable exponential sequence.

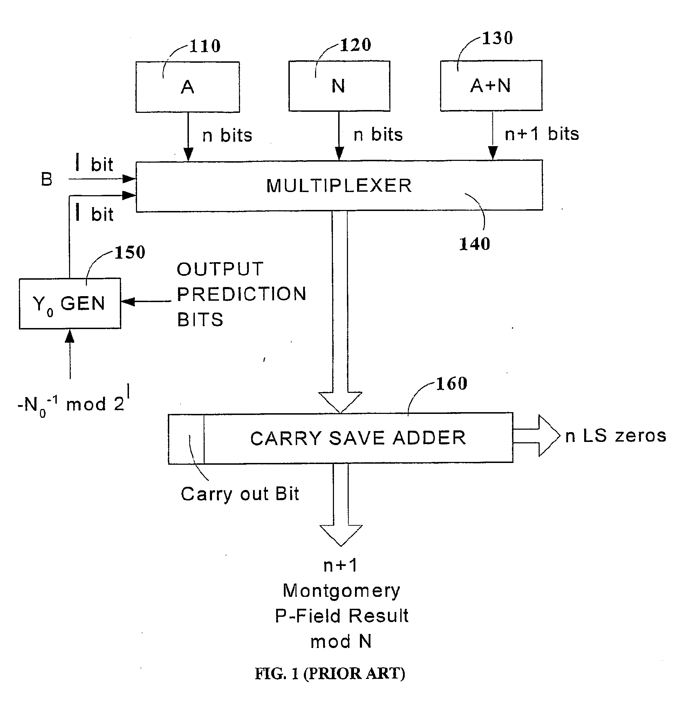

A prior-art Montgomery modulo arithmetic processor is shown in the simplified block diagram of Figure 1. A central element of the processor is a multiplexer 140, which receives an input from a generator 150 to perform an addition of input addend B with an addend selected from one of the following: an addend 110 containing only A; an addend 120 containing only N; and an addend 130, containing the sum A+N. It is to be noted that, because the arithmetic is always mod N arithmetic, adding N to any quantity does not change the congruence of the result. However, because (for practical applications) N will typically be odd, the least-significant bit of N will typically be set. A particular feature of Montgomery arithmetic is to manipulate the operation in such a way that the result is a number which is multiplied by $2^n$. Doing so eliminates the need to perform a division on the result for a modulo reduction. In each part of the operation, the input addends B and A are examined to determine the least-significant bit of their sum. If A is even (the least-significant bit is zero), then A+N will be odd (the least significant bit is one), and vice-versa. Thus, multiplexer 140 can be set to choose whichever input is needed to make the sum A+B even (least-significant bit zero) when sent to a carry save adder 160.

This mask according to a preferred embodiment of the present invention is configured to obscure and hide externally-visible physical effects, such as radiation and current consumption, during multiplication and squaring professes, by balancing the statistics so that the attacker cannot discriminate between the multiplication and squaring operations, or in fact, between multiplication by different powers of the message.

The basic Montgomery modulo multiplication functions include the following:

$$H = 2^{2n} \bmod N (1)$$

is a Montgomery retrieval transformation constant. Typically, H is computed using remainder division. However, for applications in which Montgomery multiplication is more efficient than division. H may be computed as follows:

$$H1 = 2^{(n+n/2)}$$

$$H = P(H1 \cdot H1)N = 2^{(n+n/2)} \cdot 2^{(n+n/2)} \cdot 2^{-n} \bmod N = 2^{2n}$$

The above technique can be used iteratively, as follows, where x is an integer, to compute predecessors H1. H2.... of H:

$$Hx = 2^{(n+n/(2^{\wedge}x))}$$

While (x>0)

$$H(x-1) = P(Hx \cdot Hx)N = 2^{(n+n/x)} \cdot 2^{(n+n/x)} \cdot 2^{-n} \bmod N = 2^{(n+n/(2^{\wedge}(x-1)))}$$

Finally $H = 2^{(n+n)} = 2^{2n} \bmod N$

The Montgomery operator in the P-Field,

$$P(x \cdot y)N = x \cdot y \cdot 2^{-n} \bmod N \qquad (2)$$

introduces the "Montgomery parasite" $2^{-n} \bmod N$ at each P-Field Montgomery square or multiply.

The H-constant of Equation (1) is used to establish an easily-retrievable Montgomery multiplier for a message M:

$$A = P(M \cdot H)N = M \cdot 2^{2n} \cdot 2^{-n} \bmod N = M \cdot 2^n \qquad (3)$$

A. H. and subsequent results are n-bit operands.

Performing multiplication in the P-field, where both operands $A' = A \cdot 2^n \bmod N$ and $B' = B \cdot 2^n \bmod N$ are Montgomery operands, multiplied beforehand by $2^n \bmod N$ as in Equation (3):

$$P(A' \cdot B')N = A \cdot B \cdot 2^n \bmod N \qquad (4)$$

Computation of X. the Montgomery exponentiation of $A = M \cdot 2^n$ to the d-th power:

$$X\,((A)^d)N = X\,((M\cdot 2^n)^d)N = (M)^d\cdot 2^n \bmod N, \quad (5)$$

and

Retrieval of an operand from the P-Field, of the Montgomery exponentiation result to the field of modulo natural integers:

$$P((M)^d\cdot 2^n)\cdot(1))N = M^d\cdot 2^n\cdot 1\cdot 2^{-n} \bmod N = M^d \bmod N \quad (6)$$

In the following, a $2^{nx} \bmod N$ mask is typically used to mask values of operands while performing exponentiations using classical or Montgomery methods.

Conventional Montgomery arithmetic typically starts by taking the message M, and Montgomery multiplying by $H = 2^{2n} \bmod N$, as in Equation (3). In the preferred embodiments of the present invention, a message is prepared for exponentiation and is masked by $2^{xn} \bmod N$, where x is a random number. In contrast, prior art masks are simply the random number x itself. As previously noted, however this means that the factor $x^d$ appears in the exponentiated result, and must be removed via multiplying by the inverse $x^{-d}$. This requires being able to compute the inverse $x^{-1}$. The novel mask of a preferred embodiment of the present invention, $2^{xn} \bmod N$, however, is easily removed, typically without computing the inverse of the random number x.

In embodiments of a preferred embodiment of the present invention, the mask is typically pre-computed at initialization of a secured device. It is also possible to reinstate the mask at each reset of the device, if required by the user's strategy. As previously noted, the use of a preferred embodiment of the present invention does not preclude or interfere with other security schemes such as dummy inserts.

The concept is easily demonstrated with Montgomery arithmetic.

For example, choose d = 7 and find $M^7 \bmod N$ in a masked sequence masked by random x = 2:

Instead of working in normal Montgomery arithmetic, M is multiplied by a $2^{xn} \bmod N$ mask. The final Montgomery exponentiation is masked and can be retrieved with an easily-derived masked inverse, e.g. as follows:

a) By remainder division or using a proprietary Montgomery method, generate $H^2 = 2^{4n} \bmod N$ - (here, x = 2).
b) Prepare a masked message that will generate a mask $2^{xn}$, for which one can generate an inverted $2^{-yn} \bmod N$.

$$P(M\cdot H^2)N = M\cdot 2^{4n}\cdot 2^{-n} \bmod N = M\cdot 2^{3n} = A \quad (7)$$

c) Perform a Montgomery exponentiation on A using the Chandah-sutra method. The Chandah-sutra method of exponentiation is described in The Art of Computer programming, by Donald Knuth, 2nd Edition, Volume 2. Addison Wesley. 1981 (herein denoted as "'Knuth"), on page 441:

$$P(A\cdot A)N = P(A_1^2)N = M\cdot 2^{3n}\cdot M\cdot 2^{3n}\cdot 2^{-n} \bmod N = M^2\cdot 2^{5n} \bmod N \quad (8)$$

$$P(P(A_1^2)N\cdot A)N = P(A_2^3)N = M^3\cdot 2^{5n}\cdot 2^{3n}\cdot 2^{-n} = M^3\cdot 2^{7n} \quad (9)$$

$$P((P(A_2^3)N)\cdot(P(A_2^3)N))N = P(A_3^6)N = M^3\cdot 2^{7n}\cdot M^3\cdot 2^{7n}\cdot 2^{-n} \bmod N \quad (10)$$

$$P((P(A_2{}^3)N)\cdot(P(A_2{}^3)N))N = M^6\cdot2^{13n} \bmod N \quad (11)$$

$$P((P(A_3{}^6)N)\cdot A)N = P(A_4{}^7)N = M^6\cdot2^{13n}\cdot M\cdot2^{3n}\cdot2^{-n} \bmod N \quad (12)$$

$$P((P(A_3{}^6)N)\cdot A)N = M^7\cdot2^{15n} \bmod N \quad (13)$$

Generating the retrieval mask is based on the Montgomery parasite $2^{-n} \bmod N$, which is preferably achieved by a single Montgomery multiplication:

$$P(1\cdot1)N = 2^{-n} \bmod N \quad (14)$$

and then, typically, a similar exponentiation procedure raises this mask retrieval value to $2^{-14n} \bmod N = Y$.

The retrieval from the P-Field and the removal of the mask is now typically performed in a single Montgomery multiplication of the exponential quantity times Y:

$$M^7 \bmod N = P((M^7\cdot2^{15n})\cdot2^{-14n})N = M^7\cdot2^n\cdot2^{-n} \bmod N. \quad (15)$$

This shows that even when e (the encryption exponent) is not known, the decryption sequence of chosen message is typically generated without knowledge of the totient function of N.

Generally if the exponent multiplier x is larger than 90 in the $2^{xn} \bmod N$ random mask the attacker is able neither to derive the mask nor to craft a chosen message with the random mask, in order to perform a chosen-message attack.

A Montgomery Mask method for Devices with Limited Montgomery Capabilities or Having an Extended Euclid Multiplicative Inverse

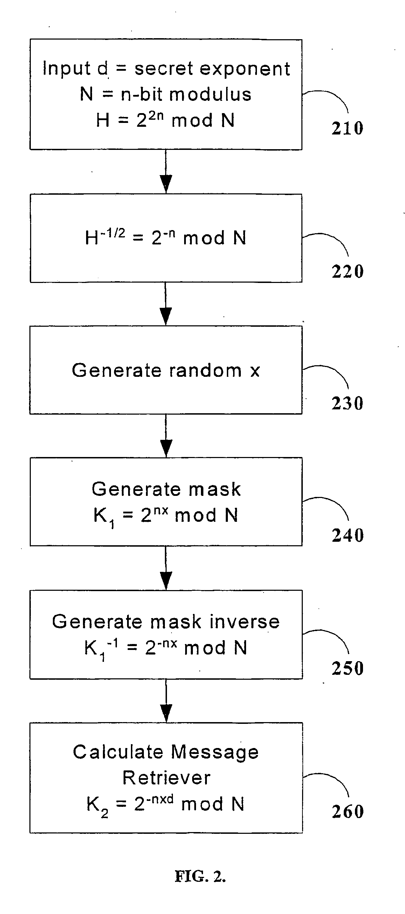

Figure 2 is a flowchart illustrating a preferred sequence of preparing a Montgomery mask and message retriever according to a first embodiment of the present invention.

In step 210, the secret exponent d and the n-bit modulus N, where d and N are integers, are input, and H is computed according to Equation (1). $H^{1/2} = 2^n \bmod N$ may be computed by single integer subtraction:

$$2^n - N \equiv 2^n \bmod N \quad (16)$$

Next, in step 220, $H^{-1/2}$ is computed:

$$H^{-1/2} = 2^{-n} \bmod N \equiv P(1\cdot1)N = 2^{-n} \bmod N,$$

as in Equation (14), noted previously.

In step 230, a secret number x is generated. Preferably, x is at least 90, assuming that a work factor of $2^{90}$ is necessary to make an exhaustive search to compromise the secret x.

In step 250. the mask inverse, $K_1$ is computed:

$$K_1 = 2^{nx} \bmod N = (2^n)^x \bmod N \quad (17)$$

In step 260, the message retriever, $K_2$ is computed:

$$K_2 = 2^{-nxd} \bmod N = ((2^{-n})^x)^d \bmod N. \quad (18)$$

$K_1$ and $K_2$ may be updated by x', at will, as follows:

$$K_1' = ((K_1) \bmod N)^{x'} \bmod N \quad (19)$$

$$K_2' = ((K_2) \bmod N)^{x'} \bmod N \quad (20)$$

where x' is typically a small randomly-chosen positive integer.

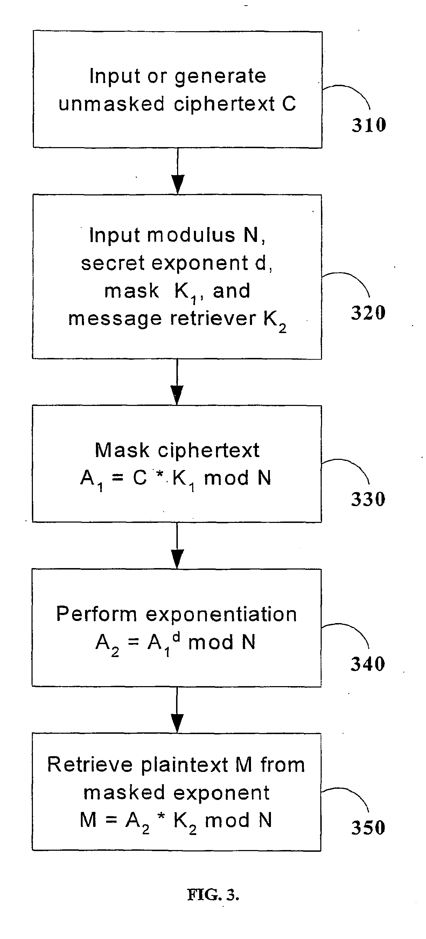

Figure 3 is a flowchart showing the sequence of using a Montgomery mask on an input message, according to a second embodiment of the present invention., to perform a masked chosen-message attack-resistant exponentiation on ciphertext C, where d, N, $K_1$ and $K_2$ are available (for example, in memory):

In a step 310, ciphertext C is input, from which can be computed C mod N.
In a step 320, N. d, $K_1$, $K_2$ are input (such as from memory).
In a step 330, compute $A_1 = C*K_1 \bmod N$, to obtain the masked ciphertext via a modulo multiplication.
In a step 340, compute $A_2 = A_1{}^d \bmod N$; a masked modulo exponentiation = $(C*K_1)^d \bmod N = M*2^{nxd} \bmod N$.
In a step 350, retrieve the plaintext M:

$$M = C^d \bmod N = A_2*K_2 \bmod N = ((C^d)(2^{ndx}))(2^{-ndx}) \bmod N.$$

The only added resources are n-bit constants $K_1$ and $K_2$. to be stored in memory.
Masked Montgomery Exponentiation in a Preferred Apparatus Embodiment
$H = 2^{2n} \bmod N$ can be computed by modulo division.
$H^{-1/2} = 2^{-n} \bmod N \equiv P(1 \cdot 1)N = ((1 \cdot 1) 2^{-n}) \bmod N$, the multiplicative inverse of $2^n \bmod N$.
x = a secret random number; $2 \leq x \leq 95$; preferably about $90 \leq x$, assuming that a work factor of $2^{90}$ is appropriate to make an exhaustive search to compromise the secret x. Then, for precomputing $K_1$:

$$M_1 = X((H)^x)N = X(2^n \cdot 2^n)^x = 2^{nx} \cdot 2^n \bmod N,$$

$$K_1 = P(H \cdot M_1)N = 2^{2n} \cdot 2^n \cdot 2^{nx} \cdot 2^n \cdot 2^{-n} \bmod N = 2^{nx} \cdot 2^{2n} \bmod N.$$

When precomputing $K_2$, note that $2^{-n} \cdot 2^n \bmod N = 1 \bmod N$.

$$M_2 = X(1^x)N = X((2^{-n} \cdot 2^n)^x)N = 2^{-nx} \cdot 2^n$$

$$M_3 = X((M_2)^d)N = X((2^{-nx} \cdot 2^n)^d)N = 2^{-nxd} \cdot 2^n$$

$$K_2 = P(M_3 \cdot 1)N = 2^{-nxd} \bmod N.$$

$K_1$ and $K_2$ are typically updated by x', a small positive integer:

$$K_1 \leftarrow K_1' = ((K_1) \bmod N)^{x'} \bmod N$$

$$M_4 = X((M_3)^{x'})N = X(((2^{-nx} \cdot 2^n)^d)^{x'})N = 2^{-nxx'd} \cdot 2^n$$

$$K_2 \leftarrow K_2' = P(M_4 \cdot 1)N = 2^{-nxx'd} \bmod N.$$

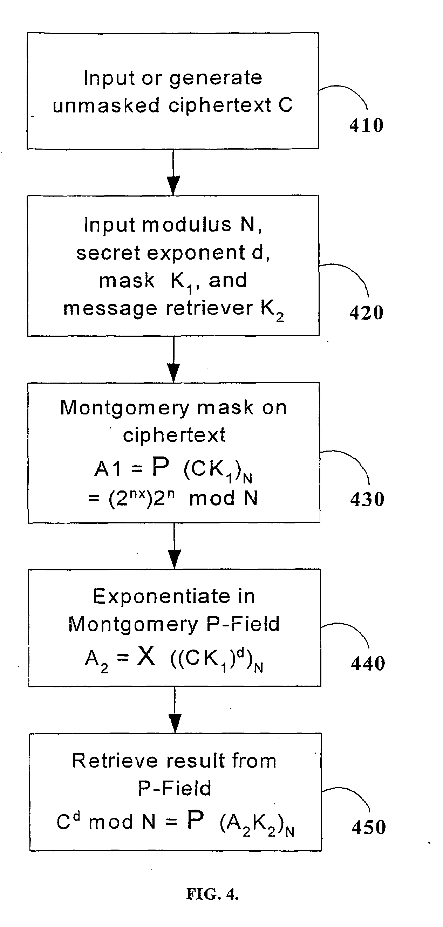

Figure 4 is a flowchart showing the sequence of using a Montgomery mask on an input message in a third embodiment of the present invention, using Montgomery functions operable on a modulo multiplication apparatus to perform a masked chosen-message attack-resistant exponentiation on a chosen ciphertext, computing $C^d \bmod N$. Perform the following operations:

In a step 410. input or generate the unmasked ciphertext message C. In a step 420, input the secret exponent d, the n-bit modulus N, the mask $K_1$, and the message retriever $K_2$; these are computed as detailed above.
In a step 430, compute the Montgomery mask on the ciphertext:

$$A_1 = P(C \cdot K_1)N = (C \cdot 2^{nx}) \cdot 2^n \bmod N.$$

In a step 440. compute the Montgomery masked exponent:

$$A_2 = P(((C \cdot 2^{nx}) \cdot 2^n)^d)N = C^d \cdot 2^{nxd} \cdot 2^n \bmod N.$$

In a step 450, retrieve the result from the Montgomery P-Field-

$$C^d \bmod N = P((A_2 \cdot K_2))N = P((C^d \cdot 2^{nxd} \cdot 2^n)(2^{-nxd}))N.$$

For security considerations. $K_1$ and $K_2$ are generally updated as detailed above.
This masked exponentiation precludes generation of H prior to each exponentiation, typically saving 4% of the process time with the same number of multiplications and squarings.

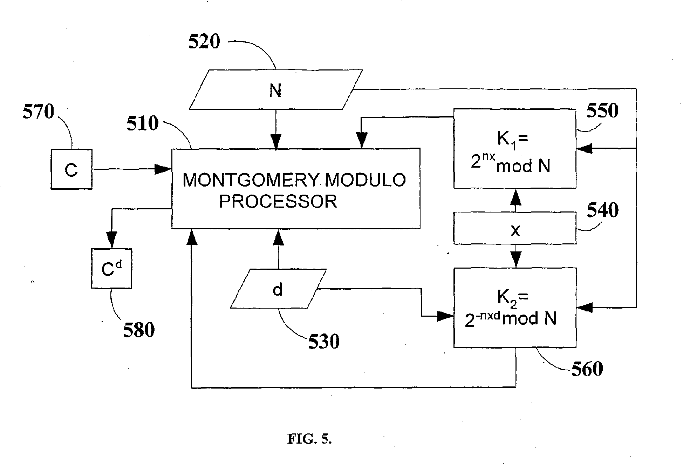

Figure 5 is a simplified block diagram of apparatus for masking and retrieving messages according to a fourth embodiment of the present invention, which can be used with any suitable method such as the method illustrated in Figure 4. A modulo processor 510 receives a modulus 520 and an exponent 530. A random number generator 540 provides a random integer to a mask generator 550 and a message retriever generator 560. A ciphertext message 570 is input to modulo processor 510, which outputs a plaintext message 580. In a further embodiment of the present invention, modulo processor 510 performs modulo arithmetic in a traditional fashion. In yet another embodiment of the present invention, however, modulo processor 510 performs Montgomery arithmetic.
While the invention has been described with respect to a limited number of embodiments, it will be appreciated that many variations, modifications and other applications of the invention may be made.
It is appreciated that the software components of the present invention may, if desired, be implemented in ROM (read-only memory) form. The software components may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

**Claims**

1. A method for masking a ciphertext message input to a cryptographic device operative to raise the message to a secret exponent d modulo a binary modulus N, the binary modulus N having n bits, wherein the natural Montgomery inverse is $2^{-n}$, the method comprising:

    generating a random integer x;
    computing a mask equal to the number $2^{nx} \bmod N$; and
    computing a message retriever equal to the number $2^{-nxd} \bmod N$.

2. A method according to claim 1 and also comprising:

    multiplying the ciphertext message by said mask to form a product;
    raising said product to the secret exponent d modulo the binary modulus N to form a masked exponentiated message; and
    multiplying said masked exponentiated message by said message retriever to form a retrieved plaintext message.

3. Apparatus for masking a ciphertext message input to a cryptographic device operative to raise the ciphertext message to an exponent d modulo a binary modulus N, the binary modulus N having n bits, wherein the natural Montgomery inverse is $2^{-n}$, the apparatus comprising:

    a Montgomery modulo processor operative to compute the product of two numbers modulo the binary modulus N and to raise a number to the power d modulo the binary modulus N;
    **characterised in that** the apparatus further comprises:

        a random integer generator for generating a random integer x;
        a mask generator operative to compute a mask equal to the number $2^{nx} \bmod N$,

    and to feed said mask to said modulo processor such that said modulo processor computes the product of the ciphertext message and said mask modulo the binary modulus N, and raises said product to the power of the exponent d modulo the binary modulus N to compute a masked message; and
    a message retriever generator operative to compute a message retriever equal to the number $2^{-nxd} \bmod N$ and to feed said message retriever to said modulo processor, such that the modulo processor computes the product of said masked message and said message retriever to compute a plaintext message.

**Patentansprüche**

1. Verfahren zum Maskieren einer Chiffretext-Nachrichteneingabe an eine kryptografische Vorrichtung, die betriebsmäßig die Nachricht mit einem geheimen Exponenten d potenziert, modulo eines binären Modulus N,
    wobei der binäre Modulus N n Bits aufweist,
    wobei das natürliche Montgomery-Inverse $2^{-n}$ ist, und
    wobei das Verfahren umfasst:

        Erzeugen einer ganzzahligen Zufallszahl x;
        Berechnen einer Maske, die gleich der Zahl $2^{nx} \bmod N$ ist, und
        Berechnen eines Nachricht-Wiedererlangers, der gleich der Zahl $2^{-nxd} \bmod N$ ist.

**2.** Verfahren nach Anspruch 1,
ferner umfassend:

Multiplizieren der Chiffretext-Nachricht mit der Maske, um ein Produkt zu bilden,
Potenzieren des Produkts mit dem geheimen Exponenten d, modulo des binären Modulus N, um eine maskierte potenzierte Nachricht zu bilden, und
Multiplizieren der maskierten potenzierten Nachricht durch den Nachricht-Wiedererlanger, um eine empfangene Klartext-Nachricht zu bilden.

**3.** Vorrichtung zum Maskieren einer Chiffretext-Nachrichteneingabe an eine kryptografische Vorrichtung, die betriebsmäßig die Chiffretext-Nachricht mit einem Exponenten d potenziert, modulo eines binären Modulus N,
wobei der binäre Modulus N n Bits aufweist,
wobei das natürliche Montgomery-Inverse $2^{-n}$ ist,
wobei die Vorrichtung umfasst:

einen Montgomery-Modulo-Prozessor, der betriebsmäßig das Produkt von zwei Zahlen, modulo den binären Modulus N, berechnet und eine Zahl mit der Potenz d potenziert, modulo des binären Modulus N,
**dadurch gekennzeichnet, dass** die Vorrichtung ferner umfasst:

einen Ganzzahlige-Zufallszahl-Generator zum Erzeugen einer ganzzahligen Zufallszahl x,
einen Masken-Generator, der betriebsmäßig eine Maske gleich der Zahl $2^{nx}$mod N berechnet und die Maske dem Modulo-Prozessor zuführt, derart, dass der Modulo-Prozessor das Produkt der Chiffretext-Nachricht mit der Maske modulo des binären Modulus N berechnet, und das Produkt mit dem Exponenten d potenziert, modulo den binären Modulus N, um eine maskierte Nachricht zu berechnen, und
einen Nachricht-Wiedererlangungs-Generator, der betriebsmäßig einen Nachricht-Wiedererlanger berechnet, der gleich der Zahl $2^{-nxd}$ mod N ist und betriebsmäßig den Nachricht-Wiedererlanger dem Modulo-Prozessor zuführt, derart, dass der Modulo-Prozessor das Produkt der maskierten Nachricht und des Nachricht-Wiedererlangers berechnet, um eine Klartext-Nachricht zu berechnen.

## Revendications

**1.** Procédé destiné à masquer un message texte chiffré introduit au niveau d'un dispositif cryptographique pouvant fonctionner pour élever le message à un exposant secret d modulo un module binaire N, le module binaire N ayant n bits, dans lequel l'inverse naturel de Montgomery est $2^{-n}$, le procédé comprenant le fait :

de générer un entier aléatoire x ;
de calculer un masque égal au nombre $2^{nx}$ MOD N ; et
de calculer un extracteur de message égal au nombre $2^{-nxd}$ MOD N.

**2.** Procédé selon la revendication 1 et comprenant en outre le fait :

de multiplier le message texte chiffré par ledit masque afin de former un produit ;
d'élever ledit produit à l'exposant secret d modulo le module binaire N afin de former un message exponentié masqué.

**3.** Appareil destiné à masquer un message texte chiffré introduit au niveau d'un dispositif cryptographique pouvant fonctionner pour élever le message texte chiffré à un exposant d modulo un module binaire N, le module binaire N ayant n bits, dans lequel l'inverse naturel de Montgomery est $2^{-n}$, l'appareil comprenant :

un processeur modulo de Montgomery pouvant fonctionner pour calculer le produit de deux nombres modulo le module binaire N et pour élever un nombre à la puissance d modulo le module binaire N ;
**caractérisé en ce que** l'appareil comprend en outre :

un générateur d'entier aléatoire servant à générer un entier aléatoire x ;
un générateur de masque pouvant fonctionner pour calculer un masque égal au nombre $2^{nx}$ MOD N, et pour alimenter ledit masque audit processeur modulo de sorte que ledit processeur modulo calcule le produit du message texte chiffré et dudit masque modulo le module binaire N, et élève ledit produit à la puissance de l'exposant d modulo le module binaire N afin de calculer un message masqué ; et
un générateur d'extracteur de message pouvant fonctionner pour calculer un extracteur de message égal au nombre $2^{-nxd}$ MOD N et pour alimenter ledit extracteur de message audit processeur modulo, de sorte que le processeur modulo calcule le produit dudit message masqué et dudit extracteur de message afin de calculer un message texte en clair.

-110        -120        -130

| A | N | A+N |

n bits      n bits      n+1 bits

B ——| bit ——>
——| bit ——>

MULTIPLEXER

140

-150

$Y_0$ GEN  <—  OUTPUT PREDICTION BITS

$-N_0^{-1} \bmod 2^l$

-160

CARRY SAVE ADDER  ——>  n LS zeros

Carry out Bit

n+1
Montgomery
P-Field Result
mod N

**FIG. 1 (PRIOR ART)**

Input d = secret exponent
N = n-bit modulus
H = $2^{2n}$ mod N

210

$H^{-1/2} = 2^{-n}$ mod N

220

Generate random x

230

Generate mask
$K_1 = 2^{nx}$ mod N

240

Generate mask inverse
$K_1^{-1} = 2^{-nx}$ mod N

250

Calculate Message
Retriever
$K_2 = 2^{-nxd}$ mod N

260

FIG. 2.

Input or generate
unmasked ciphertext C

310

Input modulus N,
secret exponent d,
mask $K_1$, and
message retriever $K_2$

320

Mask ciphertext
$A_1 = C * K_1 \bmod N$

330

Perform exponentiation
$A_2 = A_1{}^d \bmod N$

340

Retrieve plaintext M from
masked exponent
$M = A_2 * K_2 \bmod N$

350

FIG. 3.

EP 1 692 800 B1

Input or generate
unmasked ciphertext C

410

Input modulus N,
secret exponent d,
mask $K_1$, and
message retriever $K_2$

420

Montgomery mask on
ciphertext
$A1 = P\ (CK_1)_N$
$= (2^{nx})2^n\ mod\ N$

430

Exponentiate in
Montgomery P-Field
$A_2 = X\ ((CK_1)^d)_N$

440

Retrieve result from
P-Field
$C^d\ mod\ N = P\ (A_2K_2)_N$

450

FIG. 4.

16

FIG. 5.

## REFERENCES CITED IN THE DESCRIPTION

**Patent documents cited in the description**

- US 5991415 A, Shamir
- US 6298442 B, Kocher
- WO 03014916 A, Joye
- US 6185596 B

**Non-patent literature cited in the description**

- **Douglas Stinson.** Cryptography, Theory and Practice. CRC Press, 1995
- **Peter Montgomery.** Modular Multiplication Without Trial Division. *Mathematics of Computation,* 1985, vol. 44
- Cryptography on smart cards. **Borst et al.** Computer Networks. Elsevier Science Publishers BV, 16 July 2001, vol. 36, 423-435
- **Messerges et al.** Power Analysis Attacks of Modular Exponentiation in Smartcards. *Cryptographic Hardware and Embedded Systems, International Workshop,* 01 August 1999, 144-157
- **Donald Knuth.** Addison Wesley. 1981, vol. 2, 441